Europäisches Patentamt

European Patent Office

Office européen des brevets

(11) Publication number : **0 505 310 A1**

# (12) EUROPEAN PATENT APPLICATION

(21) Application number : **92610016.5**

(22) Date of filing : **18.03.92**

(51) Int. Cl.⁵ : **A01J 25/11**

(30) Priority : **18.03.91 DK 476/91**

(43) Date of publication of application :
**23.09.92 Bulletin 92/39**

(84) Designated Contracting States :
**AT BE CH DE ES FR GB IT LI NL SE**

(71) Applicant : **Gasbjerg, Knud**
**Skaerskovshedevej 3, Funder**
**DK-8600 Silkeborg (DK)**

(72) Inventor : **Gasbjerg, Knud**
**Skaerskovshedevej 3, Funder**
**DK-8600 Silkeborg (DK)**

(74) Representative : **Skoett-Jensen, Knud**
**c/o Patentingenioer K. Skoett-Jensen**
**Lemmingvej 225**
**DK-8361 Hasselager (DK)**

(54) **A method and a system for prepressing a cheese coagulum mass.**

(57) For a prepressing of a whey filled cheese there is used an overlying perforated sieve plate (8) arranged as a bottom plate in the upper pressing element, which is made as a flat container unit (4) having a non-perforated intermediate bottom plate (10) and connected with pump means (22) for currently pumping whey from the space (14) below the intermediate bottom (10) to the space (12) thereabove. Hereby it is sufficient to lower the pressing element (4) onto the mixture in the vat (2), without pressure from hydraulic cylinders, as the weight of the pressing element will automatically be increased in response to the whey being drained upwardly through the perforated bottom (8). The take-out of the whey will all the time take place from the upper surface of the mixture, where the coagulum concentration is smallest, this conditioning a both rapid and practically wasteless pressing out of the way.

FIG.1

FIG.2

EP 0 505 310 A1

The present invention relates to a method of prepressing cheese coagulum and an associated prepressing vat for the production of cheese, viz. a vat for receiving an amount of cheese coagulum in admixture with whey and adapted for draining off the whey from the coagulum, such that what is left is a mass of coagulum that is compressible into a cheese curd, which can be cut into curd blocks that are pressable into cheese members.

Traditionally, such prepressing vats are provided with a perforated bottom, through which the whey can be drained off when the cheese coagulum mass is pressed downwardly by means of an overlying pressing plate, which, e.g. by hydraulic pressure cylinders, is pressed downwardly against the coagulum mass. The coagulum is a little heavier than the whey, such that it will naturally collect itself at the bottom of the vat, whereby, however, it will have a choking effect on the through-flow of the whey, resulting in a sluggish drainage of the whey and in a considerable waste of coagulum particles being pressed out through the perforations. Moreover, the vat installation is- rather costly due to the hydraulic pressing system, which has to be accurately adapted to force down the pressing plate with this plate maintaining an accurately horizontal position.

The present invention is based on a completely different consideration, namely that the whey is sucked off from above, where the whey/coagulum-concentration is least concentrated. The upper pressing plate will still be necessary, but according to the invention it is perfectly possible to use a perforated plate for this purpose. Such a plate is usable as a bottom element of a plate box serving as a whole as a pressing plate. The plate box is provided with an intermediate bottom, below which there is arranged a system of suction pipes, and above which there is provided a tank space for holding the whey which, by means of a pump and the said suction pipes, may be pumped into the tank space from the space underneath the intermediate bottom. The entire plate box may be suspended in wires by means of a suitable hoisting equipment, and after the filling of the vat it can just be eased down for free floating in the surface of the contents of the vat. Initially the plate box, by its own weight, will press against the surface sufficiently to cause the surface whey to penetrate up through the perforated bottom plate of the box, an when this penetrated whey is currently pumped up into the tank space the plate box will be steadily heavier, which is exactly what is wanted. The circumstances may well be so adapted that the plate box in its final position, i.e. when practically all of the whey has been drained out of the mass of the coagulum, exerts just the desired pressure against the remaining coagulum mass in the vat, this being achievable by adaptation of the proper weight of the plate box and the degree of filling of the tank space, inasfar as it is of course an obvious expedient that the whey can be pumped away from this space for avoiding an overweight of the box system. Such an overweight can also be counteracted by applying a certain pulling force to the lift wires, such that in practice it can be permissible that the entire amount of the whey can be moved up into the tank space, from which it can be emptied when the operation is finished and the plate box is raised.

As the perforated drainage plate will all the time be located just where the coagulum concentration is the least, the drainage of the whey may take place during a relatively short time, which, per se, is an important result of the invention, as the cheese quality is improved whenever this operation is effected reasonably rapidly. Moreover, a considerable reduction of the associated waste will be obtained, because all the time the whey will be retracted from the area holding the smallest concentration of the coagulum.

The required hoisting equipment will be much cheaper than the hydraulic pressing systems used so far, and also the associated energy consumption will be reduced.

The plate box may be balanced so that it seeks to float horizontally in the vat, which will still be important for a uniform prepressing of the coagulum. Should the box be inclined this can be detected in the hoisting system, from which the inclination can be remedied by an automatic correction of the pull in one or more of the wires.

The plate box may be separable for cleaning, but preferably it is made as a closed unit, adapted for so-called CIP-cleaning by means of a suitable detergent. As particles may get stuck in the perforations it is desirable that the bottom plate be flushable, and the earlier mentioning of 'a system of suction pipes' is relevant to this; the exsuction as such could well take place through a single or quite few suction inlets, but just for the CIP-cleaning it is advantageous in stead to use a widespread pipe system with many suction inlets, because during inverted operation of the system, when effecting CIP-cleaning, the bottom plate can be flushed from many flushing holes in the pipe system evenly distributed over the bottom.

In the following the invention is described in more detail with reference to the drawing, in which

Fig. 1 is a perspective view of a pressing element suspended above a prepressing vat in a system according to the invention,

Fig. 2 is a cross sectional view of the vat with the pressing element lowered therein,

Fig. 3 is a partly sectional side view of the pressing element, and

Fig. 4 is a cross sectional view thereof.

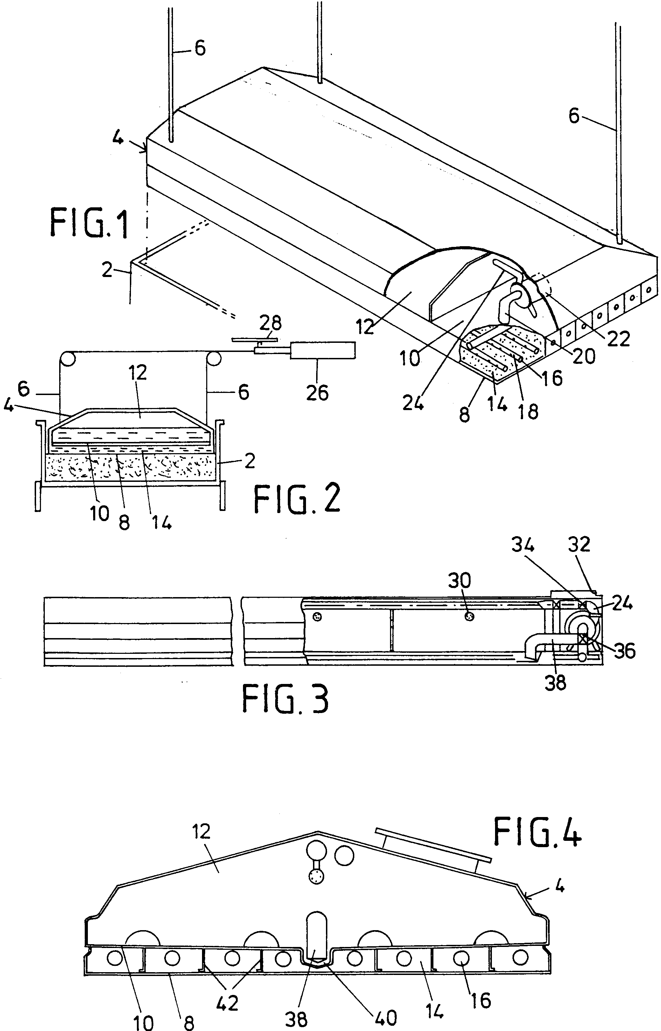

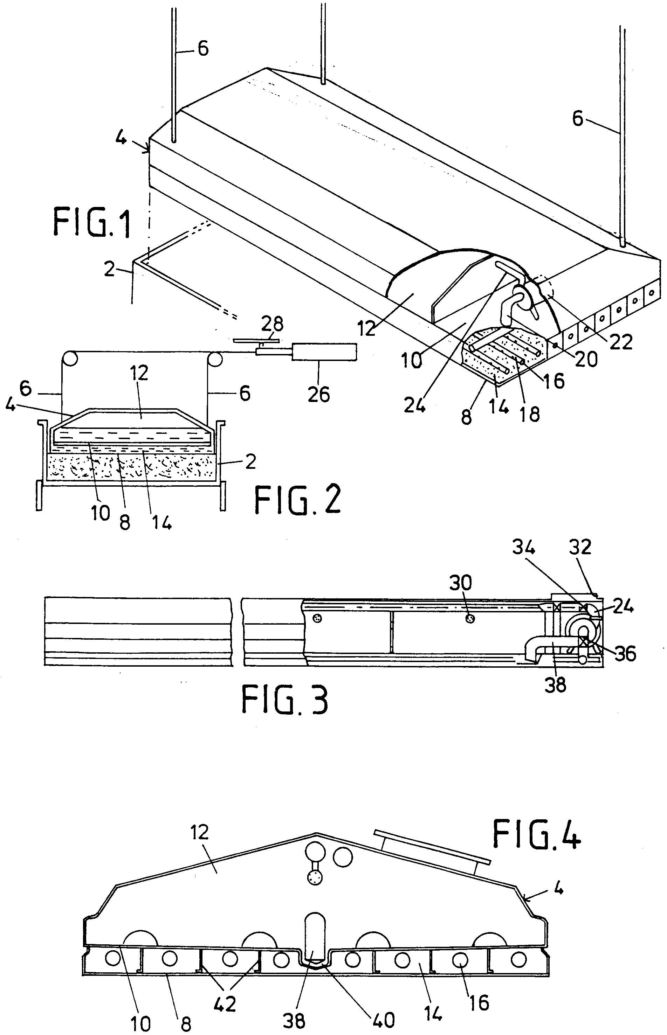

According to Fig. 1, above a prepressing vat 2 that may have a simple, unperforated bottom, there is suspended a pressing element 4 in four wires 6 connected to a non-illustrated hoisting system. The element 4 is a flat, closed container made with,a perforated bottom 8 and with an intermediate bottom 10, above which there is a closed chamber 12. In the space designated 14 between the bottom plates 8 and 10 is mounted a system of pipes 16 provided with perforations 18. These pipes are interconnected and are collectively connected with a suction conduit 20 of a pump 22 mounted in a closed end chamber of the upper container chamber 12. The outlet pipe 24 of the pump is connected with the container chamber 12, such that liquid in the lower chamber 14 may be pumped up to the upper chamber 12.

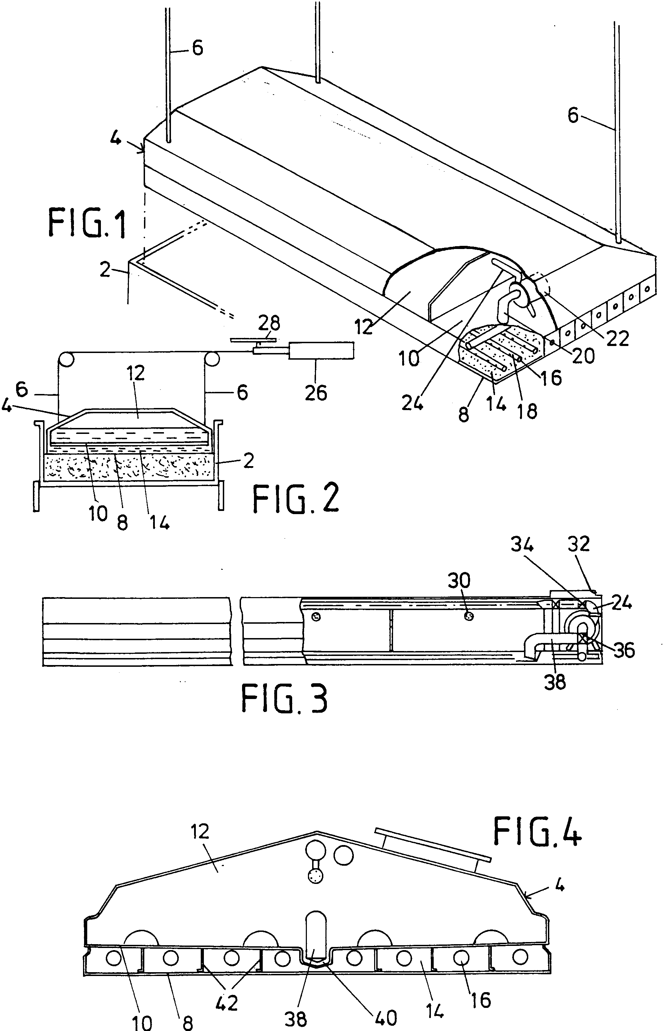

The said mixture of whey and coagulum is filled into or laid out in the vat 2 while the element 4 assumes its raised position, and thereafter the element is lowered so as to float in the vat as shown in Fig. 2, controlled by the hoisting system in a manner such that the element 4 will steadily be held horizontally. In Fig. 2 it is shown as a possibility that the hoisting system comprises a lifting/easing cylinder 26 at either end of the element 4, with associated position sensors 28, by means of which the desired parallel displacement of the element 4 will be achievable. The element 4 is not left for free floating in the vat, but it is lowered in a controlled manner, with the wires 6 being held stretched. The upper layer of the mixture in the vat will have a high proportion of whey, which will readily penetrate the perforated plate 8 up into the chamber, from which the whey is pumped up to the upper chamber 12. Thereby the element 4 will be heavier, such that it can press with increased force on the remaining amount of the mixture. When the element 4 has reached its final level it is raised again, but immediately upon an initial raising it is raised a bit extra at one end; the layer of whey located just above the bottom plate 8 has not been able to be exsucked through the pipes 16, but when the element 4 is tilted by the initial raising this whey can run down to the pump area, such that it will only be a small amount of whey that falls down through the perforations of the bottom plate 8 when the element 4 is further raised.

The whey collected in the chamber 12 may be pumped over to a collector tank already before the element 4 is raised, or it can be brought to run to the collector tank upon the element being raised.

In Fig. 3 it is shown that the outlet pipe 24 from the pump 22 may debouch in the upper chamber 12 or in individual sections thereof through perforated cross pipes 30, such that these connections will afterwards be usable also for the introduction of CIP cleaning liquid in the system.

It is also shown in Fig. 3 that above the pump there may be arranged an access opening 32, through which an exterior exsuction hose can be connected with a three-way valve 34 in the discharge pipe 24, while in the suction pipe 20 there may be arranged a switch over valve 36, which, through the opening 32, is operable from above for shifting between suction from the bottom chamber 14 and suction through a pipe 38 from the bottom area of the upper chamber 12. As also shown in Fig 4, in the central longitudinal area of the intermediate bottom 10 there may be provided a groove 40, which receives the pipe 38, and towards which the intermediate bottom is inwardly and downwardly inclined, such that the whey can be sucked away with a very small residual volume.

A subsequent CIP-cleaning can suitably be arranged with the element 4 relowered into the vat 2, upon the latter being emptied for the prepressed cheese coagulum. The cleaning liquid can, from above, be pressed through the pump 22 and out through the pipe system 16 by connecting a pressurized conduit to the valve 34, fig. 3. Hereby the cleaning liquid will be spread out into the lower chamber 14, in which there is provided longitudinal, vertical reinforcing rib plates 42. The cleaning liquid will be let out through the perforated bottom so as to fall down into the vat 2 for further cleaning of the vat.

In another phase CIP cleaning liquid can be supplied to the upper chamber 12 through the connection at the valve 34, and an introduced volume of the liquid may then be circulated with the use of the pump 22 and finally also be pumped out by means of the pump, where-after a flushing may be carried out in the same manner.

## Claims

1. A method of prepressing of cheese coagulum by driving out whey from a mixture of whey and coagulum in a prepressing vat, whereby the mixture, by means of an overhead pressing element, is pressed against a horizontal, perforated plate, through which the whey is drained off, characterized in using for this pressing a flat, vat or container shaped pressing element having a perforated bottom plate and a non-perforated intermediate bottom plate, this pressing element being set down onto the surface of the said mixture in the prepressing vat, and the whey hereby entering the space between the two bottom plates being currently exsucked from this space and transferred to the vat- or container space located above the intermediate bottom plate; the pressing element is guided downwardly in a controlled horizontal position, the lowering thereof preferably being caused solely by the combined weight of the pressing element and of the volume of whey that is built up in the vat- or container space.

2. A prepressing system for prepressing of a mixture of a coagulum and whey by the method claimed in claim 1, comprising a prepressing vat and, located thereabove, a pressing element having a lower, horizontally oriented pressing surface, which, when urged downwardly against the mixture and still being held horizontally, forces the whey component to be let out through a perforated plate in the system, characterized in that the perforated plate is arranged as a bottom plate in the overlying pressing element, this element being made as a flat vat- or container unit having above the perforated bottom plate a non-perforated intermediate bottom plate with an overlying vat- or container space, whereas the flat space between the bottom plate and the intermediate bottom plate communicates with an exsuction connection to a pump system for pumping up of the whey from this space into the container space above the intermediate bottom plate.

3. A system according to claim 2, characterized in that the bottom of the prepressing vat is non-perforated.

4. A system according to claim 2, characterized in that the container unit is mounted suspended in hoisting wires of an associated hoisting system, which comprises means for maintaining the horizontal orientation of the container unit during the downlet thereof until its final pressing position in the prepressing vat.

5. A system according to claim 2, characterized in that the pump system is mounted on the container unit itself.

6. A system according to claim 2, characterized in that the mouth portions of the exsuction connection from the space between the two bottom plates of the container unit are constituted by a plurality of holes in a pipe system, which is mounted in this space and is connectable with a CIP cleaning system for injection of cleaning liquid into the space through this pipe system.

FIG.1

FIG.2

FIG.3

FIG.4

FIG.1

FIG.2

FIG.3

FIG.4

EP 0 505 310 A1

FIG.1

FIG.2

FIG.3

FIG.4

7

European Patent
Office

# EUROPEAN SEARCH REPORT

Application Number

EP    92 61 0016

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2 112 718 (SOCIETE ALFA-LAVAL) * page 2, line 40 - page 3, line 35; figures * --- | 1,2 | A01J25/11 |
| A | NL-A-6 516 340 (HOLVRIEKA N.V.) * page 3, line 26 - line 32; figure 3 * --- | 1,2 | |
| A | CH-A-349 149 (A. REINHARD) * page 1, line 62 - line 73; figures * --- | 3 | |
| A | US-A-2 193 462 (R. MIOLLIS) * page 2, right column, line 11 - line 16; figures 9-11 * ----- | 4 | |
| | | | **TECHNICAL FIELDS SEARCHED (Int. Cl.5 )** |
| | | | A01J |

The present search report has been drawn up for all claims

| Place of search | Date of completion of the search | Examiner |
|---|---|---|
| THE HAGUE | 22 JUNE 1992 | MARANGONI G. |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P0401)